# EUROPEAN PATENT APPLICATION

(11) **EP 4 349 802 A1**
(43) Date of publication of application: **10.04.2024**
(21) Application number: 23201919.0
(22) Date of filing: 05.10.2023
(51) Int. Cl.: C04B 35/80, C04B 35/56, C04B 35/58

(54) **CERAMIC MATRIX COMPOSITE ARTICLE AND METHOD OF MAKING THE SAME**

(30) Priority: 07.10.2022 US 202217961996
(71) Applicant: RTX Corporation, Farmington, CT 06032 (US)
(72) Inventor: JARMON, David C., Farmington, 06032 (US)
(74) Representative: Dehns

(57) **Abstract**

A method of making a ceramic matrix composite article (200) includes fabricating a preform comprising a plurality of fibers (113) arranged in an arrangement, wherein there are spaces (118) between adjacent ones of the fibers (113); providing particles (116) to the preform, whereby the particles (116) are situated in the spaces (118); and applying a matrix material (120) to the preform by atomic layer deposition to make a ceramic matrix composite article (200). A ceramic matrix composite article (200) is also disclosed.

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section. The compressor section typically includes low and high pressure compressors, and the turbine section includes low and high pressure turbines.

This disclosure relates to composite articles, such as those used in gas turbine engines, and methods of making such articles. The articles, such as gas turbine engine components, may be subjected to high temperatures.

### SUMMARY

From one aspect, there is provided a method of making a ceramic matrix composite article according to an exemplary embodiment of this disclosure, that among other possible things includes fabricating a preform comprising a plurality of fibers arranged in an arrangement, wherein there are spaces between adjacent ones of the fibers; providing particles to the preform, whereby the particles are situated in the spaces; and applying a matrix material to the preform by atomic layer deposition to make a ceramic matrix composite article.

In a further example of the foregoing, the method also includes heat treating the ceramic matrix composite article.

In a further example of any of the foregoing, the fibers are arranged in a plurality of tows, and wherein there are voids between adjacent ones of the tows.

In a further example of any of the foregoing, the particles are situated in the voids after the providing step.

In a further example of any of the foregoing, at least one of the fibers, the matrix material, and the particles are carbides or borides of Group IV and V metals.

In a further example of any of the foregoing, all of the fibers, the matrix material, and the particles contain carbides or borides of Group IV and V metals.

In a further example of any of the foregoing, the particles are provided to the preform in a slurry.

In a further example of any of the foregoing, the slurry is provided to the preform in a first mold, and wherein the matrix material is applied in a second, different mold.

In a further example of any of the foregoing, the preform is fabricated in the first mold.

In a further example of any of the foregoing, the second mold is coated with a release agent prior to the application of the matrix material.

In a further example of any of the foregoing, the application of the matrix material includes applying a first quantity of matrix material to the preform in a mold by atomic layer deposition. The first quantity of matrix material is sufficient to rigidize the preform such that it can withstand free-standing. The method also includes removing the preform from the mold and applying a second quantity of matrix material to the preform in a free-standing position by atomic layer deposition.

In a further example of any of the foregoing, the particles include gettering particles.

In a further example of any of the foregoing, the particles have diameters ranging from submicron to 2 micron diameters, with an average diameter of 0.5 microns.

In a further example of any of the foregoing, the spaces range in size from between about 0.1 and about 2 microns.

In a further example of any of the foregoing, the fibers are arranged in tows. Voids between tows range in size from between about 200 and about 3000 microns.

There is also provided a ceramic matrix composite article according to an exemplary embodiment of this disclosure, that among other possible things includes a plurality of fibers arranged in an arrangement, wherein there are spaces between adjacent ones of the fibers; particles situated in the spaces; and matrix material surrounding the plurality of fibers and the particles. At least one of the fibers, the particles, and the matrix material are carbides or borides of Group IV and V metals.

In a further example of the foregoing, all of the fibers, the particles, and the matrix contain carbides or borides of Group IV and V metals.

In a further example of any of the foregoing, the particles include gettering particles.

In a further example of any of the foregoing, the particles have diameters ranging from submicron diameters to 2 microns, with an average diameter of 0.5 microns.

In a further example of any of the foregoing, the spaces range in size from between about 0.1 and about 2 microns.

### BRIEF DESCRIPTION OF THE DRAWINGS

Figure 1 is a schematic view of an example gas turbine engine.
Figure 2 illustrates an example preform for a ceramic matrix composite article.
Figure 3 illustrates an example method of making a ceramic matrix composite article.
Figure 4 shows an example ceramic matrix composite article.

### DETAILED DESCRIPTION

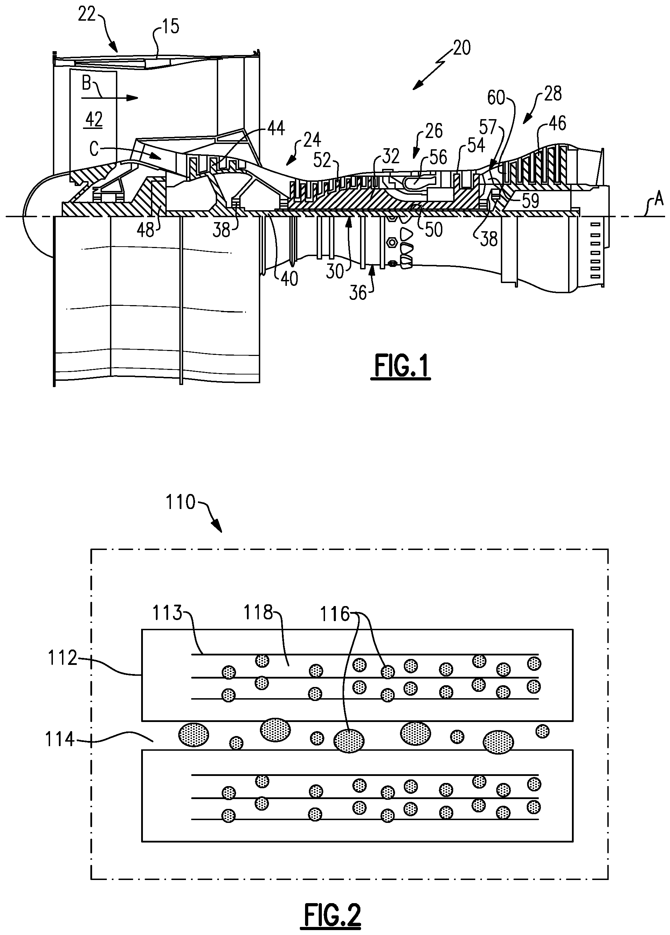

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), and can be less than or equal to about 18.0, or more narrowly can be less than or equal to 16.0. The geared architecture 48 is an epicyclic gear train, such as a planetary gear system or other gear system, with a gear reduction ratio of greater than about 2.3. The gear reduction ratio may be less than or equal to 4.0. The low pressure turbine 46 has a pressure ratio that is greater than about five. The low pressure turbine pressure ratio can be less than or equal to 13.0, or more narrowly less than or equal to 12.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to an inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above and those in this paragraph are measured at this condition unless otherwise specified. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, or more narrowly greater than or equal to 1.25. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150.0 ft / second (350.5 meters/second), and can be greater than or equal to 1000.0 ft / second (304.8 meters/second).

Figure 2 schematically illustrates a representative portion of an example ceramic matrix composite (CMC) article 100 for the gas turbine engine 20. The article 100 can be, for example, an airfoil in the compressor section 24 or turbine section 28, a combustor liner panel in the combustor section 26, a blade outer air seal, or other component that would benefit from the examples herein. Certain components of the engine 20 are exposed to ultra-high temperatures, e.g., temperatures in excess of about 1650 degrees C. In this example, the CMC article 100 is an ultra-high temperature CMC, e.g., a CMC that is capable of withstanding the ultra-high temperatures.

In general, CMCs include ceramic-based reinforcements, such as fibers, in a ceramic-based matrix. In a particular example, one or both of the reinforcements and the matrix include carbides or borides of Group IV and V metals (such as Ti, Ze, Hf, Ta, or Nb). Such materials are relatively light-weight, which improves overall engine efficiency, and have good temperature capabilities at ultra-high temperatures. Carbides have the added benefit of having good structural integrity. Borides have the added benefit of having high thermal conductivity, which is desired for some components of the engine 20.

Typical CMC articles are made by arranging or "laying-up" plies of reinforcements into a preform, applying matrix material to the reinforcements, and densifying/curing the matrix to form the article. Traditional methods of matrix application include polymer impregnation and pyrolysis (PIP), chemical vapor infiltration (CVI), and melt infiltration (MI). While these processes typically provide suitable CMCs, they tend to be expensive and time consuming and result in CMCs that have inconsistent microstructures and high porosity.

Sintering may also be required depending on the makeup of the CMC. For instance, the carbides and borides of Group IV and V metals require sintering very high temperatures even higher than ultra-high temperatures, e.g., above 2000 degrees C. These high temperatures can be deleterious to other constituents of the CMC, and may require specialized equipment and prolonged processing times.

ALD is a subclass of chemical vapor deposition (CVD) in which an article is exposed precursor chemicals in vapor form. The chemicals form a thin film or layer onto the article. In some examples, two precursor chemicals are used, and the two precursors react in a sequential and self-limiting manner to form the thin film by repeated exposure to the precursor chemicals. ALD typically provides a deposited layer with uniform and controlled thickness, and controlled chemistry with high purity. ALD is typically performed at relatively low temperatures in the range of about 200 to about 600 degrees C. Using ALD to apply matrix material can provide lower porosity, more consistent microstructure and quality, and more pure CMCs than typical methods of matrix application. However, one drawback of ALD is that it is time consuming relative to traditional matrix application processes.

Accordingly, the method described herein takes advantage of the benefits of ALD but is faster than conventional ADL processes, decreasing the time needed to apply matrix in a CMC article.

Figure 2 shows an example preform 110 for an article comprising an array of reinforcements, which in this example are bundles or tows 112 of fibers 113. The preform 110 includes plies of the tows 112 (a single ply is visible in Figure 2). The tows 112 in this example are arranged unidirectionally, but it should be understood that woven arrangement or other nonwoven arrangements are also contemplated. The below description will reference tows 112, but it should be understood that in other examples, the fibers 113 may not be arranged in tows. For instance, the fibers 113 can be freestanding or can be arranged in unidirectional tapes, which are well known in the art.

As shown, there are voids 114 between adjacent tows 112. In some examples, the voids can be an order of magnitude or more larger than the expected per-cycle deposition thickness in a typical ALD process. For instance, the voids 114 may have a size of between about 200 and about 3000 microns. Additionally, the individual fibers within the tows 112 may be spaced apart by spaces 118 ranging from between about 0.1 and about 2 microns.

To that end, the preform 110 is provided with particles 116 which enter the voids 114 and/or spaces 118 between individual fibers in the tows 112. The particles 116 can be the same or different material as the material of the reinforcements 112 or the matrix material. In other examples, the particles can include active species that protect other consistent of the CMC, such as gettering species. Gettering species are reactive with oxidants such as oxygen and water and consume those oxidants to protect surrounding material. In a particular example, the particles 116 can be milled to the desired size distribution, as is well known in the art. With the particles 116 taking up room in the voids 114/spaces 118, less matrix material thickness is needed in the preform 110. Accordingly, the use of the particles 116 enables the use of ALD to apply matrix material to the preform 110 by significantly reducing the processing time required to apply the matrix by ALD.

The particles have diameters enabling them to enter the voids 116 and spaces between fibers in the tows 112. In a particular example, the particles 116 have diameters ranging from submicron diameters to 2 microns, with an average diameter of 0.5 microns.

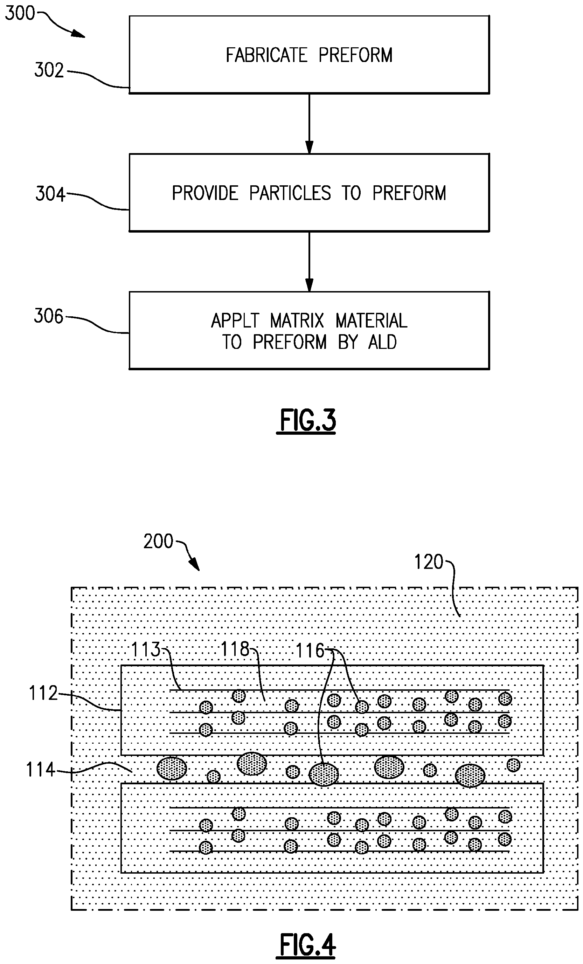

A method of making a CMC material is shown in Figure 3. In Step 302, the preform 110 is fabricated by arranging plies of tows 112 into a desired way. As noted above, the tows 112 may be woven or nonwoven, and the preform may be two-dimensional or three-dimensional.

In step 304, the particles 116 are provided to the preform 110. In a particular example, the particles 116 can be provided to the preform 110 by slurry casting an aqueous solution of the particles 116 onto the preform 110. Slurry casting is well known in the art and will not be described here in detail. In general, slurry casting includes making a slurry of particles 116 in a carrier fluid such as an aqueous carrier fluid. Surfactants or other additives may be included in the slurry. The slurry is applied to the preform 110. The slurry is then dried and/or heated to drive out the carrier fluid and/or burn out the slurry, leaving behind the particles 116 in the preform 110.

Optionally, prior to or after step 304, an interface coating can be applied to the tows 112. Interface coatings can be applied by ALD. Interface coatings are well known in the art and will not be described here in detail.

In a particular example, the preform 110 is fabricated in a tool or mold suitable for forming the preform, such as a plaster tool/mold, and the slurry is applied in the same tool/mold. That is, steps 302 and 304 can be performed in the same tool/mold.

In an example where tapes are used instead of tows, the tapes can be pulled through the slurry in step 304.

In step 306, matrix material 120 is applied to the preform 110 by ALD to form a rigidized CMC article 200 having the tows 112 and particles 116 disposed in the matrix material 120, shown in Figure 4.

In a particular example, the preform 110 is transferred from the mold/tool used in steps 302/304 to another mold/tool suitable for ALD prior to step 306. In a more particular example, the mold used in step 306 is coated with a release agent prior to transferring the preform 110 into it.

In another more particular example, the step 306 of applying the matrix material 120 is performed in two stages. In the first stage, some matrix material 120 is applied by ALD in the ALD mold. The provides some rigidization to the preform 110. The preform 110 is then removed from the ALD mold and can remain free-standing, and in the second stage, additional matrix material 120 is applied to form the CMC article 200 while the preform 110 is free-standing.

In step 308, the CMC article 200 is heat treated to consolidate the CMC article 200. The heat treating also stabilizes the matrix material 120, which was applied at low temperatures during the ALD process as discussed above.

As used herein, the term "about" has the typical meaning in the art, however in a particular example "about" can mean deviations of up to 10% of the values described herein.

Although the different examples are illustrated as having specific components, the examples of this disclosure are not limited to those particular combinations. It is possible to use some of the components or features from any of the embodiments in combination with features or components from any of the other embodiments.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A method of making a ceramic matrix composite article (200), comprising:
fabricating a preform (110) comprising a plurality of fibers (113) arranged in an arrangement, wherein there are spaces (118) between adjacent ones of the fibers (113);
providing particles (116) to the preform (110), whereby the particles (116) are situated in the spaces (118); and
applying a matrix material (120) to the preform (110) by atomic layer deposition to make a ceramic matrix composite article (200).

2. The method of claim 1, further comprising heat treating the ceramic matrix composite article (200).

3. The method of claim 1 or 2, wherein the fibers (113) are arranged in a plurality of tows (112), and wherein there are voids (114) between adjacent ones of the tows (112).

4. The method of claim 3, wherein the particles (116) are situated in the voids (114) after the providing step.

5. The method of any preceding claim, wherein at least one of the fibers (113), the matrix material (120), and the particles (116) are carbides or borides of Group IV and V metals, optionally wherein all of the fibers (113), the matrix material (120), and the particles (116) contain carbides or borides of Group IV and V metals.

6. The method of any preceding claim, wherein the particles (116) are provided to the preform (110) in a slurry.

7. The method of claim 6, wherein the slurry is provided to the preform (110) in a first mold, and wherein the matrix material (120) is applied in a second, different mold, optionally wherein the preform (110) is fabricated in the first mold.

8. The method of claim 7, wherein the second mold is coated with a release agent prior to the application of the matrix material (120).

9. The method of any preceding claim, wherein the application of the matrix material (120) comprises:
applying a first quantity of matrix material (120) to the preform (110) in a mold by atomic layer deposition, wherein the first quantity of matrix material (120) is sufficient to rigidize the preform (110) such that it can withstand free-standing;
removing the preform (110) from the mold; and
applying a second quantity of matrix material (120) to the preform (110) in a free-standing position by atomic layer deposition.

10. The method of any preceding claim, wherein the particles (116) include gettering particles.

11. The method of any preceding claim, wherein the particles (116) have diameters ranging from submicron to 2 microns, with an average diameter of 0.5 microns.

12. The method of claim 11, wherein the spaces (118) range in size from between about 0.1 and about 2 microns.

13. The method of claim 11 or 12, wherein the fibers (113) are arranged in tows (112), and wherein voids (114) between tows (112) range in size from between about 200 and about 3000 microns.

14. A ceramic matrix composite article (200), comprising:
a plurality of fibers (113) arranged in an arrangement, wherein there are spaces (118) between adjacent ones of the fibers (113);
particles (116) situated in the spaces (118); and
matrix material (120) surrounding the plurality of fibers (113) and the particles (116);
wherein at least one of the fibers (113), the particles (116), and the matrix material (120) are carbides or borides of Group IV and V metals.

15. The ceramic matrix composite article of claim 14, wherein:
all of the fibers (113), the particles (116), and the matrix material (120) contain carbides or borides of Group IV and V metals; and/or
the particles (116) include gettering particles; and/or
the particles (116) have diameters ranging from submicron diameters to 2 microns, with an average diameter of 0.5 microns, wherein the spaces (118) optionally range in size from between about 0.1 and about 2 microns.
